# EUROPEAN PATENT APPLICATION

(11) **EP 4 668 452 A1**
(43) Date of publication of application: **24.12.2025**
(21) Application number: 24927476.2
(22) Date of filing: 13.11.2024
(51) Int. Cl.: H01M 50/367, H01M 50/317, H01M 50/204, H01M 50/249

(54) **BATTERY MODULE, AND BATTERY PACK AND VEHICLE INCLUDING SAME**

(30) Priority: 26.02.2024 KR 20240027465
(71) Applicant: LG Energy Solution, Ltd., Seoul 07335 (KR)
(72) Inventor: CHANG, Hyuk-Kyun, Daejeon 34122 (KR); PARK, Gi-Chan, Daejeon 34122 (KR); PARK, Ju-Hun, Daejeon 34122 (KR)
(74) Representative: Plasseraud IP
(86) International application number: PCT/KR2024/017917
(87) International publication number: WO 2025/183303

(57) **Abstract**

Disclosed is a battery module, and a battery pack and a vehicle including the same. The battery module includes a battery cell stack in which a plurality of battery cells are stacked; a module case configured to accommodate the battery cell stack and having a discharge hole formed to discharge gas; and a reverse inflow prevention member coupled to the module case and configured to prevent discharged matter generated from the battery cell from flowing out of the module case and then reversely flowing into the module case.

## Description

### TECHNICAL FIELD

This application is based on and claims priority from Korean Patent Application No. 10-2024-0027465, filed on February 26, 2024, with the Korean Intellectual Property Office, the disclosure of which is incorporated herein in its entirety by reference.

The present disclosure relates to a battery module, and a battery pack and a vehicle including the same, and more specifically, to a battery module capable of preventing reverse inflow or propagation of high-temperature discharged matter, and a battery pack and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

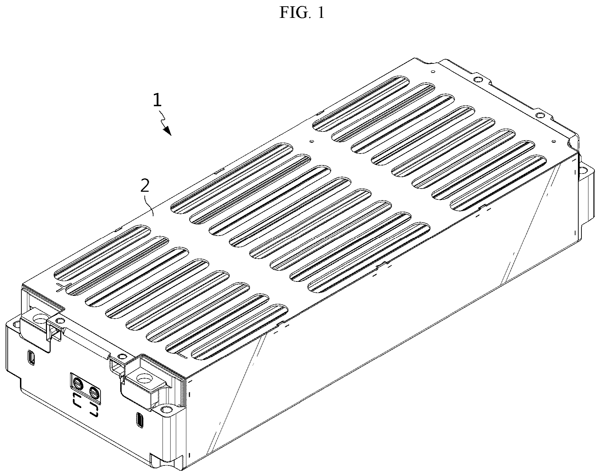

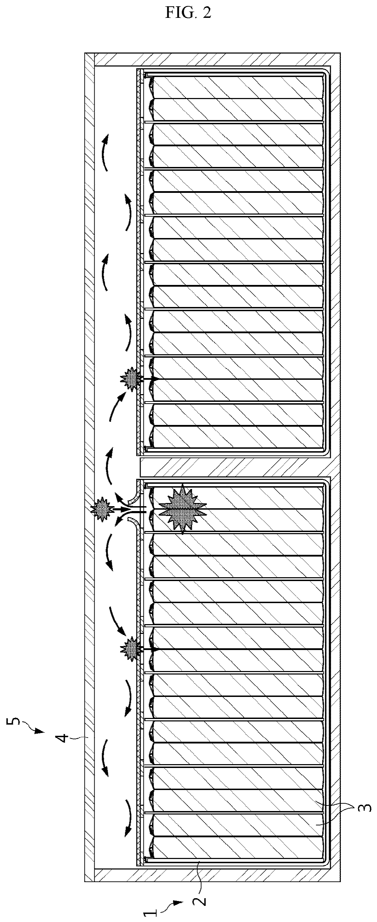

FIG. 1 is a perspective view showing a conventional battery module, and FIG. 2 is a cross-sectional view showing a battery pack including the conventional battery module of FIG. 1.

Referring to FIGS. 1 and 2, when a thermal event such as flame generation occurs in one battery cell 3 of battery module 1 in which a plurality of battery cells 3 are accommodated, high-temperature discharged matter may be discharged to the outside of the module case 2 of the battery module 1.

Also, the high-temperature discharged matter may move in various directions inside the pack case 4 of the battery pack 5 (see arrows in FIG. 2) to flow reversely into the module case 2 through another discharge hole of the module case 2 where the thermal event has occurred, or may flow into another battery module 1 where the thermal event has not occurred.

In this way, when a thermal event occurs, high-temperature discharged matter discharged from the battery module 1 may spread inside the pack case 4 and propagate to the battery module 1 where a thermal event has not occurred, causing a thermal runaway phenomenon. If flame leaks to the outside due to this thermal runaway phenomenon, there is a problem that a driver of an electric vehicle may be burned or put in a dangerous situation.

Alternatively, there is a problem in that the battery module 1 or the battery pack 5 is damaged or burned down by a chain reaction of flames caused by flame propagation, so it may be impossible to secure the stability of the battery module 1 or the battery pack 5.

In addition, there is a problem in that the internal pressure increases as the gas generated inside battery module 1 is not discharged, increasing the possibility of explosion of the battery module 1 or the battery pack 5.

### DISCLOSURE

### Technical Problem

The present disclosure is directed to providing a battery module capable of preventing high-temperature discharged matter generated and discharged by a flame from reversely flowing into the same battery module and also preventing the aforementioned high-temperature discharged matter from being transferred or propagated to another battery module, and a battery pack and a vehicle including the same.

In addition, the present disclosure is directed to providing a battery module capable of blocking high-temperature discharged matter but discharging gas in a preset direction, and a battery pack and a vehicle including the same.

In addition, the present disclosure is directed to providing a battery module capable of suppressing bending in the upper direction of the battery module, and a battery pack and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a battery cell stack in which a plurality of battery cells are stacked; a module case configured to accommodate the battery cell stack and having a discharge hole formed to discharge gas; and a reverse inflow prevention member coupled to the module case and configured to prevent discharged matter generated from the battery cell from flowing out of the module case and then reversely flowing into the module case.

In an embodiment, the reverse inflow prevention member may have a movement hole formed to communicate with the discharge hole and may include an inclined portion formed to prevent reverse inflow of the discharged matter that has moved through the movement hole.

In an embodiment, the inclined portion may be formed to be located above at least a part of the movement hole.

In an embodiment, an inclination angle of the inclined portion may be formed so that the discharged matter moving through the movement hole collides with the inclined portion and is reflected in a direction different from a direction in which the movement hole is located.

In an embodiment, the module case may include an upper case, the discharge hole may be formed in the upper case, and the reverse inflow prevention member may be coupled to the upper case.

In an embodiment, the reverse inflow prevention member may be coupled to the upper case by a screw, a bolt or a pin.

In an embodiment, the reverse inflow prevention member may include a lower portion having a movement hole formed to accommodate with the discharge hole; a side portion connected to the lower portion; and an upper portion connected to the side portion and spaced apart from the lower portion to form a space between the lower portion and the upper portion, and the inclined portion may be coupled to the lower portion and the upper portion, respectively, and is formed to be inclined from the lower portion toward the upper portion.

In an embodiment, the inclined portion may connect a side of the movement hole and the upper portion.

In an embodiment, the reverse inflow prevention member may be configured so that at least one of a front portion and a rear portion thereof is opened to allow gas to move.

In one aspect of the present disclosure, there is provided a battery pack comprising: a plurality of battery modules described above; and a pack case configured to accommodate the plurality of battery modules.

In an embodiment, the pack case may include an upper frame, and the reverse inflow prevention member may be in contact with an inner side of the upper frame.

In an embodiment, the reverse inflow prevention member may have a movement hole formed to accommodate with the discharge hole and includes an inclined portion formed to prevent reverse inflow of the discharged matter that has moved through the movement hole, and a first inclined portion of a first reverse inflow prevention member of a first battery module among the plurality of battery modules and a second inclined portion of a second reverse inflow prevention member of a second battery module adjacent to the first battery module may be formed in opposite directions.

In an embodiment, a venting portion may be formed in the pack case.

In an embodiment, the venting portion may include a venting hole configured to discharge gas generated from the battery cell; and a venting valve configured to close the venting hole and to open when an internal pressure of the pack case exceeds a preset value.

In an embodiment, the gas discharged through the discharge hole may be discharged through the venting portion.

Meanwhile, according to another aspect of the present disclosure, there may be provided a vehicle including at least one battery module described above.

### Advantageous Effects

The embodiments of the present disclosure have the effect of preventing high-temperature discharged matter generated and discharged by a flame from reversely flowing into the same battery module and also preventing the aforementioned high-temperature discharged matter from being transferred or propagated to another battery module.

In addition, there is an effect of blocking high-temperature discharged matter but discharging gas in a preset direction.

In addition, there is an effect of suppressing bending in the upper direction of the battery module.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a conventional battery module.
FIG. 2 is a cross-sectional view showing a battery pack including the conventional battery module of FIG. 1.
FIG. 3 is a perspective view showing a battery module according to an embodiment of the present disclosure.
FIG. 4 is a drawing showing a reverse inflow prevention member separated from a module case in FIG. 3.
FIG. 5 is a front view showing a battery module according to an embodiment of the present disclosure.
FIG. 6 is a perspective view showing a bottom surface of a reverse inflow prevention member in a battery module according to an embodiment of the present disclosure.
FIG. 7 is a partially sectioned view showing the reverse inflow prevention member in FIG. 3.
FIG. 8 is an enlarged view showing part A of FIG. 7.
FIG. 9 is a cross-sectional view showing a battery pack according to an embodiment of the present disclosure.
FIG. 10 is a drawing showing a venting portion in a battery pack according to an embodiment of the present disclosure.
FIG. 11 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

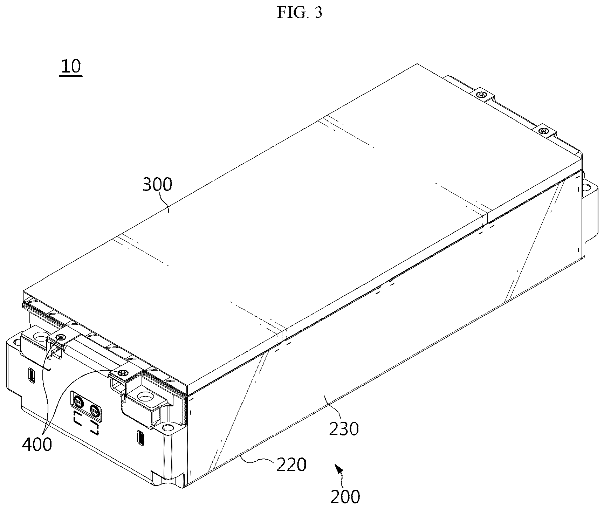

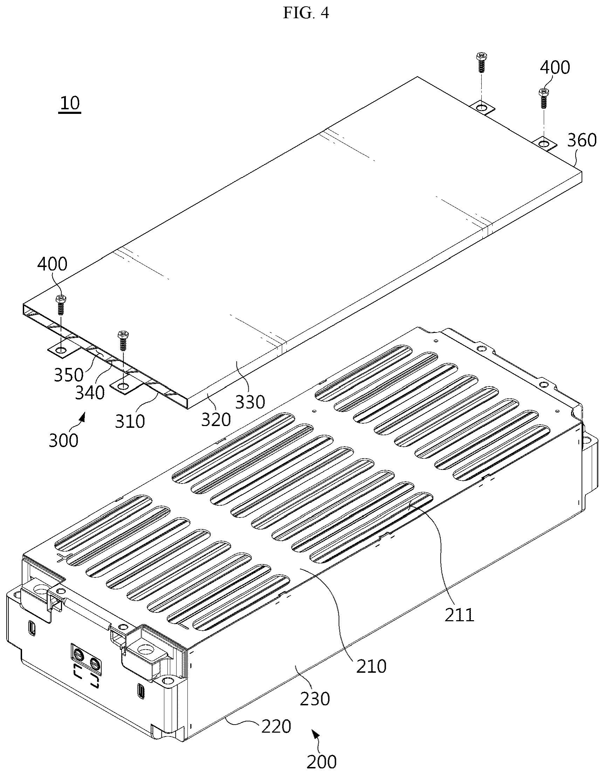

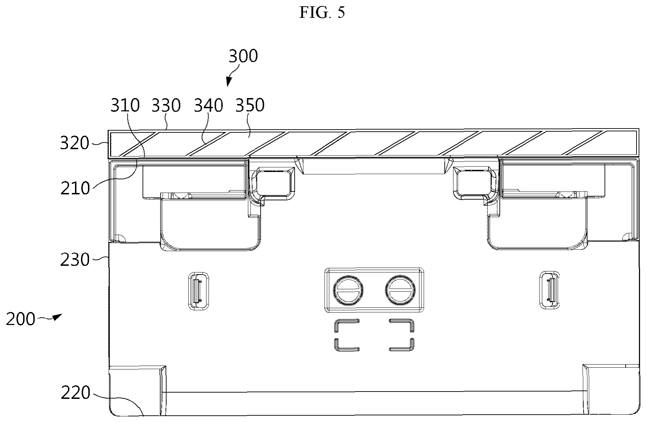

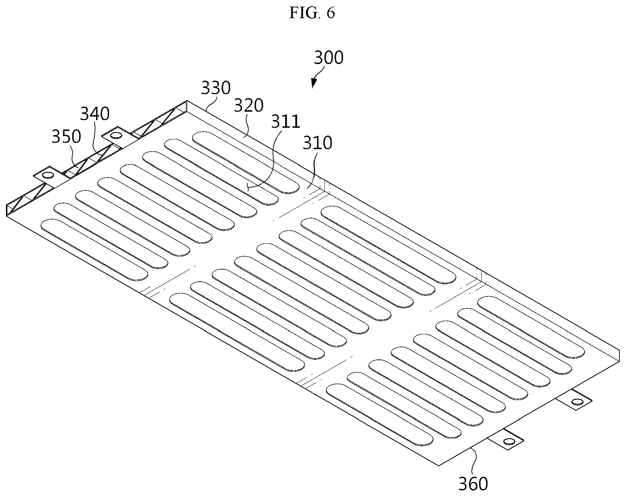

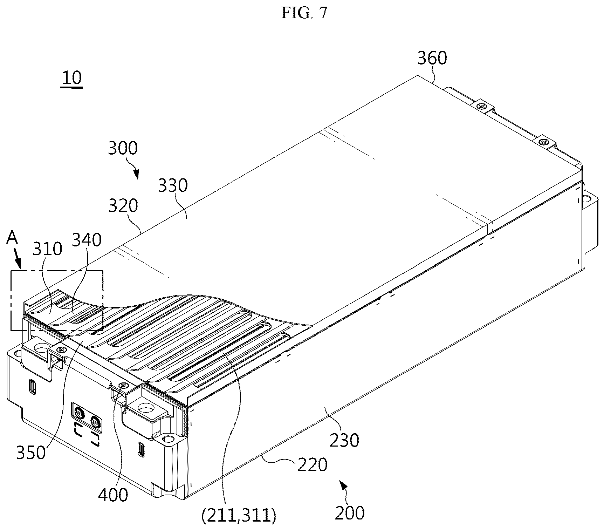

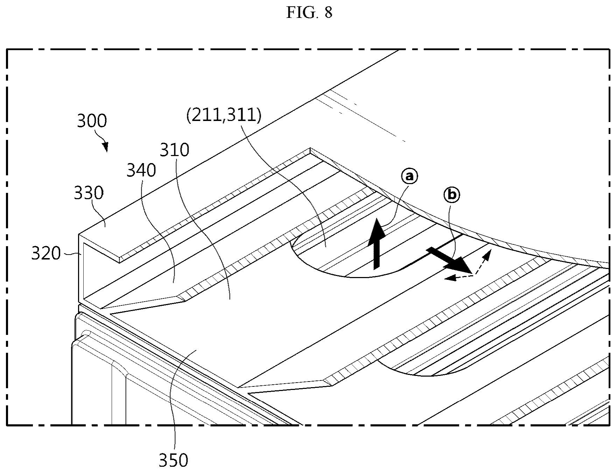

FIG. 3 is a perspective view showing a battery module according to an embodiment of the present disclosure, FIG. 4 is a drawing showing a reverse inflow prevention member separated from a module case in FIG. 3, FIG. 5 is a front view showing a battery module according to an embodiment of the present disclosure, FIG. 6 is a perspective view showing a bottom surface of a reverse inflow prevention member in a battery module according to an embodiment of the present disclosure, FIG. 7 is a partially sectioned view showing the reverse inflow prevention member in FIG. 3, and FIG. 8 is an enlarged view showing part A of FIG. 7.

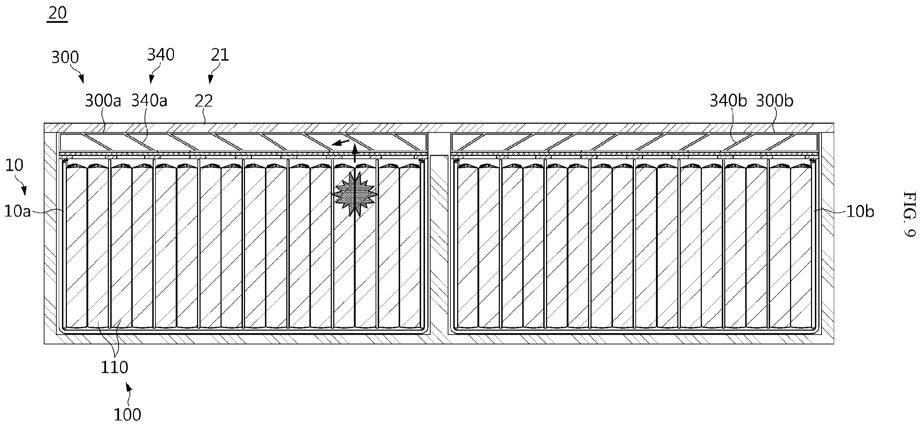

Referring to FIG. 3, a battery module 10 according to an embodiment of the present disclosure includes a battery cell stack 100 (see FIG. 9), a module case 200, and a reverse inflow prevention member 300.

The battery cell stack 100 may be configured to stack a plurality of battery cells 110. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

A plurality of battery cells 110 may be electrically connected via a bus bar (not shown). However, the bus bar is not depicted in the drawings.

The battery cell stack 100 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

The battery cell stack 100 is accommodated in the module case 200 (see FIG. 9). Also, referring to FIG. 4, a discharge hole 211 through which gas is discharged is formed in the module case 200.

Referring to FIG. 4, the module case 200 may include an upper case 210, a lower case 220, and a side case 230, and the discharge hole 211 may be formed in, for example, the upper case 210, but is not limited thereto. In addition, referring to FIGS. 3 and 4 together, the reverse inflow prevention member 300 may be coupled to the upper case 210.

The module case 200 surrounds the battery cells 110 and thereby protects the battery cells 110 from external vibrations or shocks.

The module case 200 may include a mica plate made of mica having both thermal insulation and heat resistance to prevent flame leakage. Here, the mica plate may have not only a flat mica plate shape but also a shape in which flat and curved surfaces are mixed.

The module case 200 may be formed in a shape corresponding to the shape of the battery cell stack 100. For example, if the battery cell stack 100 is formed in a hexahedral shape with a rectangular cross-section, the module case 200 may also be formed in a hexahedral shape corresponding thereto.

The module case 200 may be manufactured by, for example, bending a metal plate, whereby the module case 200 may be manufactured in an integral form. If the module case 200 is manufactured in an integral form, the coupling process may become easy and simple. Alternatively, the module case 200 may be provided in a separate form and coupled by welding, etc. However, the material of the module case 200 is not limited to a metal material.

Referring to FIGS. 3 and 4 together, the reverse inflow prevention member 300 may be coupled to the module case 200, for example, the upper case 210 of the module case 200. The reverse inflow prevention member 300 prevents high-temperature discharged matter generated from the battery cell 110 from flowing out of the module case 200 and then flowing back into the module case 200 (reverse inflow).

In addition, the reverse inflow prevention member 300 prevents high-temperature discharged matter generated from the battery cell 110 and flowing out of the module case 200 from being transferred or propagated to another adjacent battery module 10.

Here, the high-temperature discharged matter includes gas, various types of high-temperature particles, flame, cell electrodes, etc., but is not limited thereto.

Referring to FIGS. 4, 6, and 7 together, a movement hole 311 that is accommodated with the discharge hole 211 may be formed in the reverse inflow prevention member 300. In addition, an inclined portion 340 may be formed in the reverse inflow prevention member 300 to prevent reverse inflow, transfer or propagation of discharged matter that has moved through the movement hole 311.

The reverse inflow prevention member 300 may be formed in various shapes, and as shown in FIG. 4, it may be formed in a hexahedral shape with a rectangular cross-section, but is not limited thereto. However, for convenience of explanation, the following description will focus on the case where the reverse inflow prevention member 300 is formed in a hexahedral shape.

Referring to FIGS. 4 to 6, the reverse inflow prevention member 300 may include a lower portion 310, a side portion 320, and an upper portion 330.

The lower portion 310 has a movement hole 311 formed to accommodate with the discharge hole 211. That is, when a flame is generated in the battery cell 110, the high-temperature discharged matter generated by the flame is discharged to the outside of the module case 200 through the discharge hole 211 and moves into the reverse inflow prevention member 300 through the movement hole 311 that is accommodated with the discharge hole 211. This will be explained in detail later.

The side portion 320 is connected to the lower portion 310. The side portion 320 is formed as a pair, and the pair of side portions 320 are connected to both ends of the lower portion 310, respectively, and connected to both ends of the upper portion 330, respectively.

The upper portion 330 is connected to the side portion 320 at both ends. Also, the upper portion 330 is spaced apart from the lower portion 310 by a preset interval. Accordingly, a preset space is formed between the upper portion 330 and the lower portion 310. Also, gas may be discharged through the space formed between the upper portion 330 and the lower portion 310.

For example, referring to FIGS. 4 and 5 together, at least one of the front portion 350 and the rear portion 360 of the reverse inflow prevention member 300 may be opened. In FIG. 5, both the front portion 350 and the rear portion 360 of the reverse inflow prevention member 300 are open, but it is also possible that only one of the front portion 350 and the rear portion 360 is opened as needed.

In addition, the gas that has moved into the reverse inflow prevention member 300 through the movement hole 311 accommodated in the discharge hole 211 is discharged to the outside of the reverse inflow prevention member 300 through the front portion 350 and the rear portion 360 of the reverse inflow prevention member 300, and may be discharged to the outside of the pack case 21 through a venting portion 23, explained later, formed in the pack case 21.

This method has the effect of enabling directional venting, which allows gas to be discharged in a direction intended by a designer.

Referring to FIG. 5, the inclined portion 340 is coupled to the lower portion 310 and the upper portion 330, respectively, and may be formed to be inclined from the lower portion 310 toward the upper portion 330. Referring to FIGS. 7 and 8, the inclined portion 340 may be configured to connect a side of the movement hole 311 and the upper portion 330.

Also, referring to FIGS. 5 and 8 together, the inclined portion 340 is formed to be located above at least a part of the movement hole 311. That is, since the inclined portion 340 is located above the movement hole 311, the high-temperature discharged matter that moves upward through the movement hole 311 (see arrow a in FIG. 8) collides with the inclined portion 340.

Here, the inclination angle of the inclined portion 340 may be formed so that the discharged matter moving through the movement hole 311 may collide with the inclined portion 340 and be reflected in a direction different from the direction in which the movement hole 311 is located.

Accordingly, the high-temperature discharged matter that collides with the inclined portion 340 moves in a direction different from the direction in which the movement hole 311 is located (see arrow b in FIG. 8), so it does not reversely flow into the module case 200 through the movement hole 311. Also, since the high-temperature discharged matter is blocked by the reverse inflow prevention member 300, it does not transfer or propagate to another battery module 10.

By this, the high-temperature discharged matter is dispersed, so that heat may be prevented from being concentrated in a single battery module 10, and also, the thermal runaway phenomenon caused by heat propagation may be prevented.

Meanwhile, referring to FIG. 5, the reverse inflow prevention member 300 may be coupled to the upper case 210. Here, as described above, the reverse inflow prevention member 300 may be coupled to the upper case 210 so that the movement hole 311 formed in the reverse inflow prevention member 300 may be accommodated with the discharge hole 211 formed in the upper case 210 (see FIG. 7).

Here, the reverse inflow prevention member 300 may be coupled to the upper case 210 in various ways, for example, by a screw 400, a bolt, or a pin, but not limited thereto.

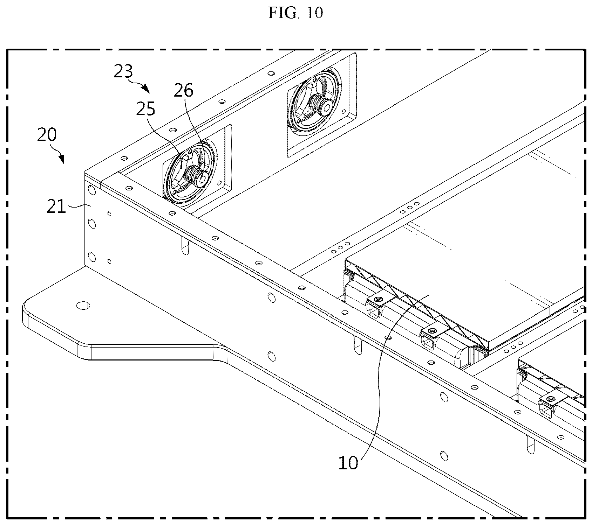

FIG. 9 is a cross-sectional view showing a battery pack according to an embodiment of the present disclosure, and FIG. 10 is a drawing showing a venting portion in the battery pack according to an embodiment of the present disclosure.

Hereinafter, a battery pack 20 according to an embodiment of the present disclosure will be described. However, any feature common to that of the battery module 10 according to an embodiment of the present disclosure will not be described again in detail.

Referring to FIG. 9, the battery pack 20 according to an embodiment of the present disclosure includes at least one battery modules 10 according to each of the former embodiments. In addition, the battery pack 20 according to an embodiment of the present disclosure includes a pack case 21 for accommodating the battery modules 10.

The pack case 21 may include an upper frame 22. In addition, the reverse inflow prevention member 300 included in the battery module 10 may be in contact with the inner side of the upper frame 22. According to this structure, since the upper frame 22 may pressurize the reverse inflow prevention member 300, there is an effect of suppressing bending of the battery module 10 in the upper direction.

Also, as in FIG. 9, the first inclined portion 340a of the first reverse inflow prevention member 300a of the first battery module 10a among the plurality of battery modules 10a, 10b and the second inclined portion 340b of the second reverse inflow prevention member 300b of the second battery module 10b adjacent to the first battery module 10a may be formed in opposite directions.

That is, the first inclined portion 340a may be formed so that the high-temperature discharged matter generated from the first battery module 10a faces in a direction away from the second battery module 10b. Also, the second inclined portion 340b may be formed so that the high-temperature discharged matter generated from the second battery module 10b faces in a direction away from the first battery module 10a.

With this structure, even if a flame occurs in one battery module 10, the high-temperature discharged matter is not transferred or propagated to another adjacent battery module 10, thereby preventing a thermal runaway phenomenon.

Referring to FIG. 10, a venting portion 23 may be formed in the pack case 21. Here, the venting portion 23 may include a venting hole 25 and a venting valve 26.

The venting hole 25 is a hole through which gas generated from the battery cell 110 is discharged, and may be formed in the pack case 21.

In addition, the venting valve 26 may be installed in the venting hole 25. The venting valve 26 may be configured in various ways. For example, the venting valve 26 may be configured to close the venting hole 25 and to open when the internal pressure of the pack case 21 exceeds a preset value.

That is, the venting valve 26 normally blocks the venting hole 25, but when gas leaks from the battery cell 110 and the internal pressure of the pack case 21 exceeds a preset value or range, the venting valve 26 opens so that the gas is discharged from the pack case 21 through the venting hole 25.

As described above, gas discharged from the module case 200 through the discharge hole 211 of the module case 200 may move into the reverse inflow prevention member 300 through the movement hole 311 accommodated in the discharge hole 211.

In addition, the gas that has moved into the reverse inflow prevention member 300 may be discharged to the outside of the reverse inflow prevention member 300 through the front portion 350 and the rear portion 360 of the reverse inflow prevention member 300. Also, the gas discharged to the outside of the reverse inflow prevention member 300 may be discharged to the outside of the pack case 21 through the venting portion 23 formed in the pack case 21.

By this, the high-temperature discharged matter is blocked by the inclined portion 340, but the gas may be discharged in a preset direction, and in this way, directional venting becomes possible.

Meanwhile, the battery pack 20 according to an embodiment of the present disclosure may further include various devices for controlling charging and discharging of the battery cells 110 stored in the battery module 10, such as a BMS, a current sensor, and a fuse.

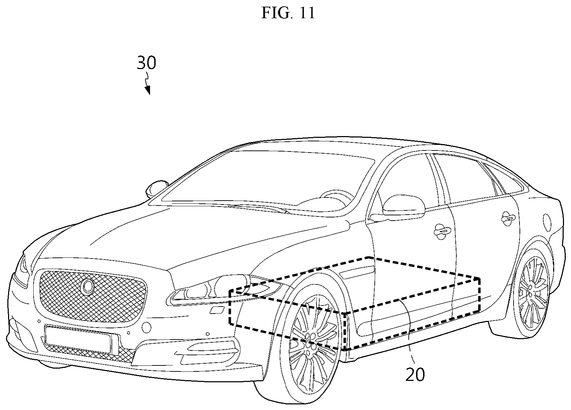

FIG. 11 is a drawing for explaining a vehicle including the battery pack according to each embodiment of the present disclosure.

Referring to FIG. 11, a vehicle 30 according to an embodiment of the present disclosure may include one or more battery modules 10 according to each embodiment described above. Alternatively, the vehicle 30 according to an embodiment of the present disclosure may include one or more battery packs 20 according to each embodiment described above. Here, the battery pack 20 may include one or more battery modules 10 according to each embodiment described above.

In addition, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a battery cell stack in which a plurality of battery cells are stacked;
a module case configured to accommodate the battery cell stack and having a discharge hole formed to discharge gas; and
a reverse inflow prevention member coupled to the module case and configured to prevent discharged matter generated from the battery cell from flowing out of the module case and then reversely flowing into the module case.

2. The battery module according to claim 1,
wherein the reverse inflow prevention member has a movement hole formed to communicate with the discharge hole and includes an inclined portion formed to prevent reverse inflow of the discharged matter that has moved through the movement hole.

3. The battery module according to claim 2,
wherein the inclined portion is formed to be located above at least a part of the movement hole.

4. The battery module according to claim 3,
wherein an inclination angle of the inclined portion is formed so that the discharged matter moving through the movement hole collides with the inclined portion and is reflected in a direction different from a direction in which the movement hole is located.

5. The battery module according to claim 2,
wherein the module case includes an upper case,
wherein the discharge hole is formed in the upper case, and
wherein the reverse inflow prevention member is coupled to the upper case.

6. The battery module according to claim 5,
wherein the reverse inflow prevention member is coupled to the upper case by a screw, a bolt or a pin.

7. The battery module according to claim 2,
wherein the reverse inflow prevention member includes:
a lower portion having a movement hole formed to accommodate with the discharge hole;
a side portion connected to the lower portion; and
an upper portion connected to the side portion and spaced apart from the lower portion to form a space between the lower portion and the upper portion,
wherein the inclined portion is coupled to the lower portion and the upper portion, respectively, and is formed to be inclined from the lower portion toward the upper portion.

8. The battery module according to claim 7,
wherein the inclined portion connects a side of the movement hole and the upper portion.

9. The battery module according to claim 1,
wherein the reverse inflow prevention member is configured so that at least one of a front portion and a rear portion thereof is opened to allow gas to move.

10. A battery pack comprising:
a plurality of battery modules according to any one of claims 1 to 9; and
a pack case configured to accommodate the plurality of battery modules.

11. The battery pack according to claim 10,
wherein the pack case includes an upper frame, and
wherein the reverse inflow prevention member is in contact with an inner side of the upper frame.

12. The battery pack according to claim 11,
wherein the reverse inflow prevention member has a movement hole formed to accommodate with the discharge hole and includes an inclined portion formed to prevent reverse inflow of the discharged matter that has moved through the movement hole, and
wherein a first inclined portion of a first reverse inflow prevention member of a first battery module among the plurality of battery modules and a second inclined portion of a second reverse inflow prevention member of a second battery module adjacent to the first battery module are formed in opposite directions.

13. The battery pack according to claim 10,
wherein a venting portion is formed in the pack case.

14. The battery pack according to claim 13,
wherein the venting portion includes:
a venting hole configured to discharge gas generated from the battery cell; and
a venting valve configured to close the venting hole and to open when an internal pressure of the pack case exceeds a preset value.

15. The battery pack according to claim 13,
wherein the gas discharged through the discharge hole is discharged through the venting portion.

16. A vehicle comprising at least one battery module according to any one of claims 1 to 9.
